(19) Europäisches Patentamt

European Patent Office

Office européen des brevets

(11) **EP 4 614 590 A1**

(12) **EUROPEAN PATENT APPLICATION**

(43) Date of publication:
**10.09.2025 Bulletin 2025/37**

(21) Application number: **25161530.8**

(22) Date of filing: **04.03.2025**

(51) International Patent Classification (IPC):
*H01M 4/133* [(2010.01)]    *H01M 4/587* [(2010.01)]
*H01M 10/0525* [(2010.01)]    *H01M 4/36* [(2006.01)]
*H01M 4/02* [(2006.01)]

(52) Cooperative Patent Classification (CPC):
**H01M 4/587; H01M 4/133; H01M 4/364;**
**H01M 10/0525;** H01M 2004/021; H01M 2004/027

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.03.2024 KR 20240031094**

(71) Applicant: **SK On Co., Ltd.**
**Seoul 03161 (KR)**

(72) Inventors:
• **LEE, Mi Ryeong**
**34124 Daejeon (KR)**
• **LEE, Jong Hyuk**
**34124 Daejeon (KR)**
• **HWANG, Hae Suk**
**34124 Daejeon (KR)**

(74) Representative: **Stolmár & Partner**
**Patentanwälte PartG mbB**
**Blumenstraße 17**
**80331 München (DE)**

(54) **NEGATIVE ELECTRODE FOR SECONDARY BATTERY AND SECONDARY BATTERY INCLUDING THE SAME**

(57)    Provided are a negative electrode for a secondary battery and a secondary battery including the same. The negative electrode for a secondary battery according to an exemplary embodiment includes: a current collector; and a negative electrode active material layer which is formed on the current collector and includes a mixture of $1^{st}$ to $n^{th}$ negative electrode active materials (n is a natural number of 2 or more), wherein the $1^{st}$ to $n^{th}$ negative electrode active materials and the mixture thereof satisfy the following Relation 1:

[Relation 1]

$$1.05 < \frac{\mathrm{Dspan\ (mix)}}{(\mathrm{Dspan\ (1)} + \mathrm{Dspan\ (2)} + \cdots + \mathrm{Dspan\ (n)})/n} < 3.0.$$

EP 4 614 590 A1

**Description**

**CROSS-REFERENCE TO RELATED APPLICATIONS**

**TECHNICAL FIELD**

The following disclosure relates to a negative electrode for a secondary battery and a secondary battery including the same.

**BACKGROUND**

As an issue of global warming which is problematic in modern society arises, a demand for environmentally friendly technologies is rapidly increasing in response thereto. In particular, as a technical demand for electric vehicles and energy storage systems (ESS) increases, a demand for a secondary battery which is in the spotlight as a means for energy storage is exploding. Therefore, studies to improve high output and high capacity properties of a lithium secondary battery are in progress.

Initially, a lithium metal was mainly used as a negative electrode material for a lithium secondary battery, but separator damage due to lithium atom growth occurs on the surface of the lithium metal as charging and discharging progresses, and recently, carbon-based materials are being mainly used. Among the carbon-based materials, graphite which is relatively low priced and has a long usage life is the most commonly used. However, graphite has a very small interlayer distance of 0.335 nm, a small site for inserting a lithium ion, and a long diffusion distance between graphite basal planes, and thus, has a limited capacity of 372 mAh/g. In addition, since it has a plate structure, a lithium ion insertion speed is slow due to a low packing density and poor particle orientation during electrode manufacture, and thus, high output characteristics are not satisfied. In particular, when it is stored at a high temperature for a long time, resistance between the carbon-based materials increases to increase internal resistance of a negative electrode including the material. Accordingly, capacity and output characteristics are significantly decreased.

Thus, development of a negative electrode active material which may suppress deterioration due to high temperature storage to improve life characteristics while showing high capacity and high output is demanded.

**SUMMARY**

An embodiment of the present disclosure is directed to provide a negative electrode for a secondary battery for improving high temperature storage and life characteristics, and a secondary battery including the same which has improved high temperature storage and life characteristics.

In one general aspect, a negative electrode for a secondary battery includes: a current collector; and a negative electrode active material layer which is formed on at least one surface of the current collector and includes a mixture of 1st to $n$th negative electrode active materials ($n$ is a natural number of 2 or more), wherein the 1st to $n$th negative electrode active materials and the mixture thereof satisfy the following Relation 1:

[Relation 1]

$$1.05 < \frac{\text{Dspan (mix)}}{(\text{Dspan (1)} + \text{Dspan (2)} + \cdots + \text{Dspan (n)})/n} < 3.0$$

wherein Dspan (1) to Dspan (n) are the Dspan of the 1st to $n$th negative electrode active materials, respectively, and Dspan (mix) is the Dspan of the mixture; and
Dspan satisfies the following Relation 2:

[Relation 2]

$$\text{Dspan} = \frac{D90 - D10}{D50}$$

wherein D10, D50, and D90 are particle diameters at volume fractions of 10%, 50%, and 90% in a cumulative particle size distribution, respectively.

In an exemplary embodiment, the 1st to nth negative electrode active materials and the mixture thereof may satisfy the following Relation 3:

[Relation 3]

$$1.05 < \frac{\text{Dspan (mix)}}{(\text{Dspan (1)} + \text{Dspan (2)} + \cdots + \text{Dspan (n)})/n} < 2.0$$

wherein Dspan (1) to Dspan (n), Dspan (mix), and Dspan are as described above.

In an exemplary embodiment, n may be a natural number of 3 or more.

In an exemplary embodiment, the 1st to nth negative electrode active materials may be independently of each other at least any one selected from the group consisting of graphite-based active materials, carbon-based active materials, and metal-based active materials.

In an exemplary embodiment, the 1st to nth negative electrode active materials may be graphite-based active materials.

In an exemplary embodiment, the 1st to nth negative electrode active materials may have a central particle diameter of 25 $\mu$m or less.

In an exemplary embodiment, a central particle diameter ratio between two active materials randomly selected from the 1st to nth negative electrode active materials may be 1.30 or more.

In an exemplary embodiment, an orientation index of the negative electrode active material layer may satisfy the following Relation 4:

[Relation 4]

$$\text{O.I (mix)} < \frac{\text{O.I (1)} + \text{O.I (2)} + \cdots + \text{O.I (n)}}{n}$$

wherein O.I (1) to O.I (n) are orientation indexes of the negative electrode active material layers measured in the negative electrode including the negative electrode active material layers each including the 1st to nth negative electrode active materials alone, and O.I (mix) is an orientation index of the negative electrode active material layer including the mixture of the 1st to nth negative electrode active materials.

In an exemplary embodiment, the negative electrode active material layer may have a porosity of 20 to 40%.

In another general aspect, a secondary battery includes the negative electrode described above; a positive electrode; a separator; and an electrolyte solution.

Other features and aspects will be apparent from the following detailed description, the drawings, and the claims.

**DETAILED DESCRIPTION OF EMBODIMENTS**

Since the embodiments described in the present specification may be modified in many different forms, the technology according to an implementation is not limited to the embodiments set forth herein. Furthermore, throughout the specification, unless otherwise particularly stated, the word "comprise", "equipped", "contain", or "have" does not mean the exclusion of any other constituent element, but means further inclusion of other constituent elements, and elements, materials, or processes which are not further listed are not excluded.

The numerical range used in the present specification includes all values within the range including the lower limit and the upper limit, increments logically derived from the form and spanning of a defined range, all double limited values, and all possible combinations of the upper limit and the lower limit in the numerical range defined in different forms. As an example, when it is defined that a content of a composition is 10% to 80% or 20% to 50%, it should be interpreted that a numerical range of 10% to 50% or 50% to 80% is also described in the specification of the present specification. Unless otherwise defined in the present specification, values which may be outside a numerical range due to experimental error or rounding off of a value are also included in the defined numerical range.

Hereinafter, unless otherwise particularly defined in the present specification, "about" and the like may be considered as a value within 30%, 25%, 20%, 15%, 10%, or 5% of a stated value.

The term "secondary battery" used in the present specification may refer to a lithium secondary battery which produces electrical energy by oxidation and reduction reactions when lithium ions are inserted and desorbed in a positive electrode and a negative electrode.

The term "D10", "D50" or "D90" used in the present specification refers to a particle diameter when a volume accumulated from a small particle diameter is 10%, 50%, and 90%, respectively in the measurement of a particle size distribution by a laser scattering method.

The term "central particle diameter" used in the present specification refers to D50 described above.

Hereinafter, the present disclosure will be described in detail. However, it is only illustrative, and the present disclosure is not limited to the specific embodiments which are illustratively described in the present disclosure.

The negative electrode for a secondary battery according to an exemplary embodiment of the present disclosure includes: a current collector; and a negative electrode active material layer which is formed on at least one surface of the current collector and includes a mixture of $1^{st}$ to $n^{th}$ negative electrode active materials (n is a natural number of 2 or more), wherein the $1^{st}$ to $n^{th}$ negative electrode active materials and the mixture thereof satisfy the following Relation 1:

[Relation 1]

$$1.05 < \frac{\text{Dspan (mix)}}{(\text{Dspan (1)} + \text{Dspan (2)} + \cdots + \text{Dspan (n)})/n} < 3.0$$

wherein Dspan (1) to Dspan (n) are the Dspan of the $1^{st}$ to $n^{th}$ negative electrode active materials, respectively, and Dspan (mix) is the Dspan of the mixture; and
Dspan satisfies the following Relation 2:

[Relation 2]

$$\text{Dspan} = \frac{D90 - D10}{D50}$$

wherein D10, D50, and D90 are particle diameters at volume fractions of 10%, 50%, and 90% in a cumulative particle size distribution, respectively.

<Negative electrode active material>

The negative electrode active material according to an exemplary embodiment of the present disclosure may include a mixture of $1^{st}$ to $n^{th}$ negative electrode active materials (n is a natural number of 2 or more). Specifically, the $1^{st}$ to $n^{th}$ negative electrode active materials may be independently of each other materials capable of adsorbing and desorbing a lithium ion.

In an exemplary embodiment, the $1^{st}$ to $n^{th}$ negative electrode active materials may be independently of each other graphite-based active materials, carbon-based active materials, or metal-based active materials.

Specifically, the negative electrode active material may be a carbonaceous material such as crystalline carbon, amorphous carbon, carbon composite, and carbon fiber; lithium metal; lithium alloy, but is not limited thereto.

An example of the amorphous carbon may include hard carbon, soft carbon, coke, mesocarbon microbeads (MCMB), mesophase pitch-based carbon fiber (MPCF), and the like.

An example of the crystalline carbon may include graphite-based carbon such as natural graphite, artificial graphite, graphitized coke, graphitized MCMB, and graphitized MPCF.

The lithium metal may include a pure lithium metal or a lithium metal on which a protective layer for suppressing dendrite growth and the like is formed. In an exemplary embodiment, a lithium metal-containing layer which is deposited or coated on a negative electrode current collector may be used as a negative electrode active material. In an exemplary embodiment, a lithium thin film layer may be used as a negative electrode active material layer.

In an exemplary embodiment, the $1^{st}$ to $n^{th}$ negative electrode active materials may be all graphite-based active materials.

In an exemplary embodiment, the $1^{st}$ to $n^{th}$ negative electrode active materials and a mixture thereof may satisfy the following Relation 1:

[Relation 1]

$$1.05 < \frac{\text{Dspan (mix)}}{(\text{Dspan (1)}+\text{Dspan (2)}+\cdots+\text{Dspan (n)})/n} < 3.0$$

wherein Dspan (1) to Dspan (n) are the Dspan of the 1st to nth negative electrode active materials, respectively, and Dspan (mix) is the Dspan of the mixture; and
Dspan is the following Relation 2:

[Relation 2]

$$\text{Dspan} = \frac{D90-D10}{D50}$$

wherein D10, D50, and D90 are particle diameters at volume fractions of 10%, 50%, and 90% in a cumulative particle size distribution, respectively.

In an exemplary embodiment, the 1st to nth negative electrode active materials and the mixture thereof may satisfy the following Relation 3:

[Relation 3]

$$1.05 < \frac{\text{Dspan (mix)}}{(\text{Dspan (1)}+\text{Dspan (2)}+\cdots+\text{Dspan (n)})/n} < 2.0$$

In the range where the 1st to nth negative electrode active materials and the mixture thereof satisfy Relation 1, specifically Relation 3, an optimized negative electrode packing structure may be formed, high packing density may be implemented, and thus, pressure (stress) on each active material particle when pressure is applied may be minimized. In addition, the contact characteristics of the active material is optimized, thereby contributing to reducing cell resistance and improving long-term characteristics. When the range is exceeded, a difference in a particle size between negative electrode active materials is excessive, so that small particles may be inserted into large particles to cause pore blockage, and an effective lithium ion migration path of an electrode may be decreased to cause a resistance increase.

In an exemplary embodiment, n may refer to a natural number of 3 or more. The negative electrode active material according to an exemplary embodiment of the present disclosure includes 3 or more negative electrode active materials, thereby having the performance improvement effect as described above or described later, even when 3 or more negative electrode active materials are included.

In an exemplary embodiment, the 1st to nth negative electrode active materials may have a central particle diameter of 25 $\mu$m or less. Specifically, the central particle diameter may be 1 $\mu$m to 23 $\mu$m. More specifically, it may be 3 $\mu$m to 20 $\mu$m. When the central particle diameter exceeds the numerical range, in particular, more than 25 $\mu$m, diffusion resistance of lithium ions is excessively increased inside the negative electrode active material, and when the central particle diameter is below the numerical range, in particular, less than 1 $\mu$m, electrode pore blockage is caused to deteriorate cell performance.

In an exemplary embodiment, the 1st to nth negative electrode active materials may have a central particle diameter ratio between two randomly selected active materials of 1.30 or more. Specifically, the central particle diameter ratio may be 1.30 to 15.0, 1.30 to 13.0, or 1.30 to 10.0. Within the range, contact between the active materials may be maximized, and packing density is improved to form an electrode structure which is favorable for lithium ion migration.

The negative electrode active material according to an exemplary embodiment of the present disclosure includes a mixture of the 1st to nth negative electrode active materials as described above, so that the active material particles may have a large particle size distribution. Thus, an optimized packing structure of the negative electrode, thereby improving the output characteristics and high temperature storage characteristics of a secondary battery.

<Negative electrode>

The negative electrode according to an exemplary embodiment of the present disclosure is a negative electrode for a secondary battery and may include a current collector; and a negative electrode active material layer including the negative electrode active material according to an exemplary embodiment described above formed on at least one surface on the current collector.

A non-limiting example of the current collector may include a copper foil, a nickel foil, a stainless steel foil, a titanium foil, a nickel foam, a copper foam, a polymer substrate including a conductive metal, and the like. The current collector is not limited, but may be, for example, 10 to 50 $\mu$m.

The negative electrode active material layer may be manufactured by coating/depositing the negative electrode active material according to an exemplary embodiment described above on the negative electrode current collector, and then performing drying and rolling. The coating process may be performed by a method such as gravure coating, slot die coating, multilayer simultaneous die coating, imprinting, doctor blade coating, dip coating, bar coating, and casting, but is not limited thereto.

A non-limiting example of the solvent for the negative electrode active material may include water, pure water, deionized water, distilled water, ethanol, isopropanol, methanol, acetone, n-propanol, t-butanol, and the like.

The negative electrode active material layer may further include a binder, and may optionally further include a conductive material, a thickener, and the like.

As the binder, a styrene-butadiene rubber (SBR)-based binder, carboxymethyl cellulose (CMC), a polyacrylic acidbinder, a poly(3,4-ethylenedioxythiophene) (PEDOT)-based binder, and the like may be used.

The conductive material may include carbon-based conductive materials such as graphite, carbon black, acetylene black, ketjen black, graphene, carbon nanotubes, vapor-grown carbon fiber (VGCF), and carbon fiber, and/or metal-based conductive materials including tin, tin oxide, titanium oxide, perovskite materials such as $LaSrCoO_3$, $LaSrMnO_3$, and the like, but is not limited thereto.

In an exemplary embodiment, the negative electrode active material layer including the negative electrode active material according to an exemplary embodiment described above may have an orientation index (O.I) satisfying the following Relation 4:

[Relation 4]

$$O.I\,(mix) < \frac{O.I\,(1)+\,O.I\,(2)+\cdots+O.I\,(n)}{n}$$

wherein O.I (1) to O.I (n) are orientation indexes of the negative electrode active material layers measured in the negative electrode including the negative electrode active material layers each including the $1^{st}$ to $n^{th}$ negative electrode active materials alone, and O.I (mix) is an orientation index of the negative electrode active material layer including the mixture of the $1^{st}$ to $n^{th}$ negative electrode active materials.

The orientation index may refer to an XRD orientation index defined as $I_{004}/I_{110}$ which is a ratio of the peak intensity of (110) plane compared to the peak intensity of (004) plane, of the negative electrode active material obtained by XRD measurement on the surface of the negative electrode active material layer.

The orientation index may represent a degree to which a crystal structure inside the negative electrode is arranged in a certain direction, and which direction the crystal inside the negative electrode is oriented inside the negative electrode may be evaluated. When the negative electrode active material layer satisfies Relation 4, the orientation of the entire negative electrode including the mixture of the $1^{st}$ to $n^{th}$ negative electrode active materials becomes lower than the negative electrode including each active material alone, so that lithium ion migration to the negative electrode active material layer becomes advantageous and internal resistance may be improved.

In an exemplary embodiment, the negative electrode active material layer may have a porosity of 20% to 40%. Specifically, the porosity may be 25% to 35%. When the numerical range is exceeded, a lithium ion migration path in the active material layer may not be uniformly formed, and, in particular, when the porosity exceeds 40%, pores are not efficiently formed, so that the long-term characteristics of the battery may be deteriorated by depletion due to the lack of an electrolyte solution. When the porosity is below the numerical range, in particular, the porosity is less than 20%, electrolyte solution impregnation may be suppressed by electrode pore blockage, and a lithium ion migration path in the active material layer is limited to cause a resistance increase.

The negative electrode according to an exemplary embodiment of the present disclosure may implement an optimized packing structure and may sufficiently secure the migration path of the electrolyte solution, while having improved orientation.

<Secondary battery>

The secondary battery according to an exemplary embodiment of the present disclosure includes a negative electrode; a positive electrode; a separator; and an electrolyte solution. Specifically, a secondary battery including a positive electrode, a negative electrode positioned opposite to the positive electrode, a separator interposed between the positive electrode and the negative electrode, and an electrolyte and other additives may be provided. The secondary battery may include the negative electrode for a secondary battery according to an exemplary embodiment of the present disclosure.

In an exemplary embodiment, the positive electrode may include a positive electrode current collector and a positive active material layer placed on at least one surface of the positive electrode current collector.

The positive electrode current collector may include stainless steel, nickel, aluminum, titanium, or an alloy thereof. The positive electrode current collector may also include carbon, nickel, titanium, or aluminum which is surface-treated with silver, or stainless steel. Though the thickness of the positive electrode current collector is not limited thereto, it may be, for example, 10 $\mu$m to 50 $\mu$m.

The positive electrode active material layer may include a positive electrode active material. The positive electrode active material may include a compound which may reversibly intercalate and deintercalate lithium ions.

According to the present invention, the positive electrode active material may include a lithium-nickel metal oxide. The lithium-nickel metal oxide may further include at least one of cobalt (Co), manganese (Mn), and aluminum (Al).

In some present invention, the positive electrode active material may include a lithium cobalt oxide-based active material, a lithium manganese oxide-based active material, a lithium nickel oxide-based active material, or a lithium iron phosphate (LFP)-based active material (for example, $LiFePO_4$).

The separator may be formed so that electrical short circuit between the positive electrode and the negative electrode is prevented and an ion flow occurs. According to an exemplary embodiment, the thickness of the separator may be 10 $\mu$m to 20 $\mu$m, but the present disclosure is not limited thereto.

For example, the separator may include a porous polymer film or a porous non-woven fabric. The porous polymer film may include a polyolefin-based polymer such as an ethylene polymer, a propylene polymer, an ethylene/butene copolymer, an ethylene/hexene copolymer, and an ethylene/methacrylate copolymer. The porous non-woven fabric may include high-melting point glass fiber, polyethylene terephthalate fiber, and the like. The separator may include ceramic-based materials. For example, inorganic particles may be coated on the polymer film or dispersed in the polymer film to improve heat resistance.

The separator may have a single layer or multilayer structure including the polymer film and/or the non-woven fabric described above.

According to the present invention, the positive electrode, the negative electrode, and the separator may be repeatedly disposed to form an electrode assembly. In some present invention, the electrode assembly may be a winding type, a stacking type, a zigzag (z)-folding type, or a stack-folding type.

The electrolyte may be contained with the electrode assembly in a case, and a secondary battery may be defined. According to present invention, a nonaqueous electrolyte solution may be used as the electrolyte.

The nonaqueous electrolyte solution includes a lithium salt as an electrolyte solution and an organic solvent, and the lithium salt may be represented by, for example, $Li^+X^-$, and the anion of the lithium salt ($X^-$) may include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2$ $(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, and the like.

The organic solvent has sufficient solubility of the lithium salt or the additive and may include an organic compound having no reactivity in a battery. The organic solvent may include, for example, at least one of carbonate-based solvents, ester-based solvents, ether-based solvents, ketone-based solvents, alcohol-based solvents, and aprotic solvents. An example of the organic solvent may include propylene carbonate (PC), ethylene carbonate (EC), butylene carbonate, diethyl carbonate (DEC), dimethyl carbonate (DMC), ethyl methyl carbonate (EMC), methyl propyl carbonate (MPC), ethyl propyl carbonate (EPC), dipropyl carbonate, vinylene carbonate (VC), methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF) and 2-methyltetrahydrofuran, ethyl alcohol, isopropyl alcohol, dimethyl sulfoxide, acetonitrile, diethoxyethane, sulfolane, $\gamma$-butyrolactone, propylene sulfite, and the like. These may be used alone or in combination of two more.

The nonaqueous electrolyte solution may further include an additive. The additive may include, for example, cyclic carbonate-based compounds, fluorine-substituted carbonate-based compounds, sultone-based compounds, cyclic sulfate-based compounds, cyclic sulfite-based compounds, phosphate-based compounds, and borate-based compounds.

The method of manufacturing a secondary battery according to an exemplary embodiment of the present disclosure for achieving the above object may be manufacturing a battery by laminating the manufactured negative electrode, a separator, and a positive electrode in this order to form an electrode assembly, placing the manufactured electrode assembly in a cylindrical battery case or an angled battery case, and then injecting an electrolyte solution. Otherwise, the battery may be manufactured by laminating the electrode assembly, impregnating the assembly in an electrolyte solution, placing the resultant product in a battery case, and sealing the case.

As the battery case, those commonly used in the art may be adopted and there is no limitation in appearance depending on the battery use, and for example, a cylindrical shape, an angled shape, a pouch shape, a coin shape, but is not limited thereto using a can may be used.

The secondary battery according to the present disclosure may be used in a battery cell used as a power supply of a small device, and also may be preferably used as a unit cell in a battery module of a medium or large device including a plurality of battery cells. An example of the small device may include a mobile phone, a laptop computer, a camera, and the like, and an example of the medium or large device may include an electric vehicle, a hybrid electric vehicle, a plug-in hybrid electric vehicle, a system for power storage, and the like, but the present disclosure is not limited thereto.

Hereinafter, the examples of the present disclosure will be further described with reference to the specific experimental examples. It is apparent to those skilled in the art that the examples and the comparative examples included in the experimental examples only illustrate the present disclosure and do not limit the appended claims, and various modifications and alterations of the examples may be made within the range of the scope and spirit of the present disclosure, and these modifications and alterations will fall within the appended claims.

(Example 1)

(1) Preparation of negative electrode slurry

A negative electrode active material which was a mixture of 2.0 g of natural graphite having a central particle diameter of 5 $\mu$m, 3.0 g of natural graphite having a central particle diameter of 13 $\mu$m, and 5.0 g of artificial graphite having a central particle diameter of 18 $\mu$m was prepared. The negative electrode active material, a binder (SBR), and a conductive material (carbon black) were mixed at a weight ratio of 96:2:2, and the mixture was dispersed in distilled water to prepare a negative electrode slurry.

(2) Manufacture of negative electrode

The negative electrode slurry prepared above was applied on a copper thin film, and dried and rolled to manufacture a negative electrode for a secondary battery on which a negative electrode active material layer having a size of 10 cm×10 cm×50 $\mu$m.

(3) Manufacture of secondary battery full cell

The negative electrode manufactured above was used as a negative electrode. As a positive electrode, $LiNi_{0.6}Co_{0.2}Mn_{0.2}O_2$ as a positive electrode active material, Denka Black as a conductive material, and PVDF as a binder were used, they were mixed at a weight ratio of 75:0.5:0.5:24 using N-methylpyrrolidone as a solvent to prepare a positive electrode slurry, and then the slurry was applied on an aluminum thin film, dried, and rolled to manufacture a positive electrode.

The positive electrode and the negative electrode manufactured above were notched into a predetermined size and laminated, and a separator (PE, 25 $\mu$m) was interposed between a positive electrode plate and a negative electrode place to form a battery. As an electrolyte solution, a 1M $LiPF_6$ solution was prepared with a solvent in which ethylene carbonate (EC)/ ethyl methyl carbonate (EMC)/ diethyl carbonate (DEC) were mixed at a volume ratio of 25:45:30, and 1 wt% of vinylene carbonate (VC), 0.5 wt% of 1,3-propenesultone (PRS), and 0.5 wt% of lithium bis(oxalato)borate (LiBOB) were added.

(Example 2)

A negative electrode for a secondary battery and a secondary battery full cell were manufactured in the same manner as in Example 1, except that a mixture of 3.0 g of natural graphite having a central particle diameter of 5 $\mu$m and 7.0 g of natural graphite having a central particle diameter of 13 $\mu$m were used as the negative electrode active material.

(Example 3)

A negative electrode for a secondary battery and a secondary battery full cell were manufactured in the same manner as in Example 1, except that a mixture of 5.0 g of natural graphite having a central particle diameter of 13 μm and 5.0 g of artificial graphite having a central particle diameter of 18 μm were used as the negative electrode active material.

(Comparative Example 1)

A negative electrode for a secondary battery and a secondary battery full cell were manufactured in the same manner as in Example 1, except that 10.0 g of natural graphite having a central particle diameter of 5 μm was used as the negative electrode active material.

(Comparative Example 2)

A negative electrode for a secondary battery and a secondary battery full cell were manufactured in the same manner as in Example 1, except that 10.0 g of natural graphite having a central particle diameter of 13 μm was used as the negative electrode active material.

(Comparative Example 3)

A negative electrode for a secondary battery and a secondary battery full cell were manufactured in the same manner as in Example 1, except that 10.0 g of artificial graphite having a central particle diameter of 18 μm was used as the negative electrode active material.

(Comparative Example 4)

A negative electrode for a secondary battery and a secondary battery full cell were manufactured in the same manner as in Example 1, except that 10.0 g of natural graphite having a central particle diameter of 14.5 μm was used as the negative electrode active material.

(Comparative Example 5)

A negative electrode for a secondary battery and a secondary battery full cell were manufactured in the same manner as in Example 1, except that 10.0 g of natural graphite having a central particle diameter of 9 μm was used as the negative electrode active material.

(Comparative Example 6)

A negative electrode for a secondary battery and a secondary battery full cell were manufactured in the same manner as in Example 1, except that 10.0 g of artificial graphite having a central particle diameter of 11.5 μm was used as the negative electrode active material.

(Comparative Example 7)

A negative electrode for a secondary battery and a secondary battery full cell were manufactured in the same manner as in Example 1, except that a mixture of 5.0 g of artificial graphite having a central particle diameter of 18 μm and 5.0 g of natural graphite having a central particle diameter of 14.5 μm were used as the negative electrode active material.

(Comparative Example 8)

A negative electrode for a secondary battery and a secondary battery full cell were manufactured in the same manner as in Example 1, except that a mixture of 5.0 g of natural graphite having a central particle diameter of 9 μm and 5.0 g of artificial graphite having a central particle diameter of 11.5 μm were used as the negative electrode active material.

Evaluation Example 1: Measurement of particle diameter distribution

The negative electrode active materials prepared in Examples 1 to 3 and Comparative Examples 1 to 8 were dispersed in a dispersion medium, and differences in diffraction patterns depending on particle size were measured using a laser diffraction particle size meter (Mastersizer3000, Malvern) to calculate the particle diameter distribution. D10, D50, and D90 were measured by calculating the particle diameters at the volume fractions of 10%, 50%, and 90%.

A Dspan value was calculated using the measured D10, D50, and D90 values, and an α value according to the following relation was determined based on the measured Dspan value:

$$\alpha = \frac{\text{Dspan (mix)}}{(\text{Dspan (1)}+\text{Dspan (2)}+\cdots+\text{Dspan (n)})/n}$$

$$\text{Dspan} = \frac{D90-D10}{D50}$$

Evaluation Example 2: Measurement of XRD orientation index (O.I)

XRD analysis was performed on the negative electrodes for a secondary battery of Examples 1 to 3 and Comparative Examples 1 to 8 at a scan rate of a diffraction angle (28) of 10° to 80° ~3.5 deg/min, using a Cu Kα ray as a diffraction light source, thereby measuring an XRD orientation index. Specifically, it was performed under the same conditions as shown in Table 1, using X-Ray diffractometer (XRD, X'pert). The XRD orientation index (O.I) was calculated as an $I_{004}/I_{110}$ value which is a ratio of the peak intensity of (110) plane compared to the peak intensity of (004) plane.

[Table 1]

| Negative electrode material | Cu |
| --- | --- |
| K-Alpha1 wavelength | 1.540598 Å |
| Generator voltage | 45 kV |
| Tube current | 40 mA |
| Scan range | 10-80° |
| Scan step size | ~3.5 deg/min |
| Divergence slit | 1/4° |
| Antiscatter slit | 1° |

Evaluation Example 3: Measurement of porosity in negative electrode

Porosity in the negative electrode was measured on the negative electrodes for a secondary battery of Examples 1 to 3 and Comparative Examples 1 to 8, using mercury porosimetry. Specifically, the pore volume of each negative electrode active material layer was measured by the mercury penetration, using mercury porosimetry (AutoPore V 9600, Micromeritics). Void volume (mL/g) was measured by dividing the measured volume (mL) by the total weight (g) of the negative electrode active material layer. The porosity in the negative electrode was measured by dividing each measured void volume by the volume of a sample including pores per unit g.

Evaluation Example 4: Evaluation of high temperature storage performance

The secondary battery full cells of Examples 1 to 3 and Comparative Examples 1 to 8 were allowed to stand in the air at 60°C for 12 weeks in a fully charged state to SOC 100, and the full cells were taken out every week, and discharged residually and fully charged to measure capacity and DC-IR and measure a capacity retention rate as compared with that before leaving at 60°C, thereby evaluating the high temperature storage performance.
The charge and discharge conditions for confirming the capacity before and after leaving were as follows: charged at charge CC-CV 0.5 C 4.2 V 0.05 C CUT-OFF, discharge conditions of CC 0.5C 2.5V CUT-OFF, at 25°C

Evaluation Example 5: Evaluation of output characteristics

The outputs of the secondary battery full cells of Examples 1 to 3 and Comparative Examples 1 to 8 were evaluated by measuring an instantaneous discharge DC-IR value at 25°C, SOC 50.
The cells were charged with a current of a 0.5 C rate by applying constant current until battery voltage reached 4.2 V, and when the battery voltage reached 4.2 V, the constant current was maintained, and charged by CUT-OFF when the current reached a 0.1 C rate. When discharge after resting for 10 minutes, the cells were discharged with a constant current of 0.5 C rate until the voltage reached 2.5 V to measure a discharge capacity. DC-IR was calculated from a difference between a voltage after resting for 10 minutes, charging to 4.2 V at a 0.5 C rate, resting again for 10 minutes, and then discharging to SOC 50 at 0.75 C rate and a voltage when discharging at 0.75 C for 10 S. An average value of the measured values of two cells was used.

The data measured in Evaluation Examples 1 to 5 are described in the following Table 2.

[Table 2]

| | D50 | D50 ratio | Dspan | α | Orientation index (O.I) | Electrode porosity (%) | High temperature storage performance (%) | Output characteri stics (%) |
|---|---|---|---|---|---|---|---|---|
| Example 1 | 13 | ≥1. 38 | 1.40 | 1.50 | 11.4 | 30.1 | 99 | 96 |
| Example 2 | 10 | 2.60 | 1.58 | 1.60 | 6.5 | 29.8 | 100 | 100 |
| Example 3 | 15 | 1.38 | 1.10 | 1.22 | 15.2 | 30.2 | 98 | 87 |
| Comparative Example 1 | 5 | - | 1.00 | - | 10.4 | 18.6 | 80 | 74 |
| Comparative Example 2 | 13 | - | 0.98 | - | 14.8 | 25 | 93 | 82 |
| Comparative Example 3 | 18 | - | 0.82 | - | 15.9 | 32.9 | 94 | 75 |
| Comparative Example 4 | 14.5 | - | 0.90 | - | 15.2 | 25 | 91 | 80 |
| Comparative Example 5 | 9 | - | 0.86 | - | 8.2 | 19.2 | 88 | 79 |
| Comparative Example 6 | 11.5 | - | 0.93 | - | 13.9 | 23 | 87 | 80 |
| Comparative Example 7 | 16.2 | 1.24 | 0.91 | 1.06 | 16.1 | 31.8 | 91 | 72 |
| Comparative Example 8 | 10.7 | 1.28 | 0.91 | 1.02 | 16.4 | 34.8 | 82 | 75 |

As shown in Table 2, it was confirmed that Examples 1 to 3 including the mixture of the negative electrode active materials according to an exemplary embodiment of the present disclosure in the negative electrode active material layer showed better high temperature storage performance and output characteristics than the comparative Examples.

Example 1 had the negative electrode active material layer formed of a mixture of different three negative electrode active materials, and it was confirmed that the Dspan values of the mixture and each active material satisfied Relation 1. In addition, it was found that the central particle diameter ratio value of each active material forming the mixture was 1.38 or more. Meanwhile, it was confirmed that the electrode orientation of the negative electrode active material layer of Example 1 satisfied Relation 4 from the relationship with the electrode orientation of the active material layer formed of only each active material forming the mixture, and pores were also formed well.

In Examples 2 and 3 also, it was confirmed that the Dspan values of the mixture of two active materials and each active material satisfied Relation 1, and it was found that the central particle diameter ratio value of each active material forming the mixture was 2.60 and 1.38. Meanwhile, it was confirmed that the electrode orientation of the negative electrode active material layers of Examples 2 and 3 satisfied Relation 4 from the relationship with the electrode orientation of the active material layer formed of only each active material forming the mixture, and pores were also formed well.

However, in Examples 7 and 8, it was confirmed that the Dspan values of the mixture of two active materials and each active material did not satisfy Relation 1, and it was found that the central particle diameter ratio value of each active material forming the mixture was 1.24 and 1.28. Meanwhile, it was confirmed that the electrode orientation of the negative electrode active material layers of Examples 7 and 8 was rather increased as compared with the electrode orientation of the active material layer formed of only each active material forming the mixture, and pore properties were also poor, for example, the lithium ion migration path was not uniformly formed throughout the active material and only a large path was locally formed.

Comparative Examples 1 to 6 related to a negative electrode layer having a single composition, and it was confirmed that the pore properties were poor, for example, the electrode orientation was not good or pore blockage occurred (Comparative Examples 1 and 5).

This is understood as improving the high temperature storage performance and the output characteristics of the battery including the negative electrode as such, by promoting improvement of packing density, internal resistance properties, and lithium ion migration characteristics, since Examples 1 to 3 including the mixture of the negative electrode active materials in the negative electrode active material layer according to an exemplary embodiment of the present disclosure may have optimized packing structure and orientation while having a large particle size distribution.

Meanwhile, since Examples 1 to 3 all showed good performance improvement, it was confirmed that when each active material and the mixture thereof satisfy the relations according to the present disclosure, regardless of the number of the added active material species, an improvement effect may be shown.

According to an exemplary embodiment of the present disclosure, active material damage during a manufacturing process of a negative electrode for a secondary battery may be minimized, and the orientation of the negative electrode for a secondary battery and electrolyte solution mobility may be improved.

According to another exemplary embodiment of the present disclosure, the high temperature storage and the life characteristics of a secondary battery may be improved, and a high-density and high-energy secondary battery may be implemented.

The above description is only an example to which the principle of the present disclosure is applied, and other constitutions may be further included without departing from the scope of the present disclosure.

**Claims**

1. A negative electrode for a secondary battery comprising:

   a current collector; and
   a negative electrode active material layer which is formed on at least one surface of the current collector and includes a mixture of $1^{st}$ to $n^{th}$ negative electrode active materials (n is a natural number of 2 or more),
   wherein the $1^{st}$ to $n^{th}$ negative electrode active materials and the mixture thereof satisfy the following Relation 1:

   [Relation 1]

   $$1.05 < \frac{\text{Dspan (mix)}}{(\text{Dspan (1)} + \text{Dspan (2)} + \cdots + \text{Dspan (n)})/n} < 3.0$$

   wherein Dspan (1) to Dspan (n) are the Dspan of the $1^{st}$ to $n^{th}$ negative electrode active materials, respectively, and Dspan (mix) is the Dspan of the mixture; and
   Dspan satisfies the following Relation 2:

   [Relation 2]

   $$\text{Dspan} = \frac{D90 - D10}{D50}$$

   wherein D10, D50, and D90 are particle diameters at volume fractions of 10%, 50%, and 90% in a cumulative particle size distribution, respectively.

2. The negative electrode for a secondary battery of claim 1, wherein the $1^{st}$ to $n^{th}$ negative electrode active materials and the mixture thereof satisfy the following Relation 3:

   [Relation 3]

   $$1.05 < \frac{\text{Dspan (mix)}}{(\text{Dspan (1)} + \text{Dspan (2)} + \cdots + \text{Dspan (n)})/n} < 2.0$$

   wherein Dspan (1) to Dspan (n), Dspan (mix), and Dspan are as defined in claim 1.

3. The negative electrode for a secondary battery of any of claims 1 or 2, wherein n is a natural number of 3 or more.

4. The negative electrode for a secondary battery of any of claims 1 to 3, wherein the $1^{st}$ to $n^{th}$ negative electrode active materials are independently of each other at least any one selected from the group consisting of graphite-based active materials, carbon-based active materials, and metal-based active materials.

5. The negative electrode for a secondary battery of any of claims 1 to 4, wherein the $1^{st}$ to $n^{th}$ negative electrode active materials are graphite-based active materials.

6. The negative electrode for a secondary battery of any of claims 1 to 5, wherein the $1^{st}$ to $n^{th}$ negative electrode active materials have a central particle diameter of 25 $\mu$m or less.

7. The negative electrode for a secondary battery of any of claims 1 to 6, wherein a central particle diameter ratio between two active materials randomly selected from the $1^{st}$ to $n^{th}$ negative electrode active materials is 1.30 or more.

8. The negative electrode for a secondary battery of any of claims 1 to 7, wherein an orientation index of the negative electrode active material layer satisfies the following Relation 4:

[Relation 4]

$$O.I\,(mix) < \frac{O.I\,(1) + O.I\,(2) + \cdots + O.I\,(n)}{n}$$

wherein O.I (1) to O.I (n) are orientation indexes of the negative electrode active material layers measured in the negative electrode including the negative electrode active material layers each including the $1^{st}$ to $n^{th}$ negative electrode active materials alone, and O.I (mix) is an orientation index of the negative electrode active material layer including the mixture of the $1^{st}$ to $n^{th}$ negative electrode active materials.

9. The negative electrode for a secondary battery of any of claims 1 to 8, wherein the negative electrode active material layer has a porosity of 20 to 40%.

10. A secondary battery comprising: the negative electrode of any of claims 1 to 9; a positive electrode; a separator; and an electrolyte solution.

| | Europäisches Patentamt European Patent Office Office européen des brevets | **EUROPEAN SEARCH REPORT** | **Application Number** EP 25 16 1530 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/140310 A1 (SOTOME KAZUHIRO [JP] ET AL) 5 May 2022 (2022-05-05) * paragraphs [0060], [0062], [0065], [0113] - [0122] * ----- | 1-10 | INV. H01M4/133 H01M4/587 H01M10/0525 H01M4/36 |
| X | EP 4 057 383 A2 (PRIME PLANET ENERGY & SOLUTIONS INC [JP]) 14 September 2022 (2022-09-14) * paragraphs [0054], [0061] - [0065] * ----- | 1,2,4,5, 7,9 | ADD. H01M4/02 |

**TECHNICAL FIELDS SEARCHED (IPC)**

H01M

The present search report has been drawn up for all claims

| Place of search | Date of completion of the search | Examiner |
|---|---|---|
| Munich | 21 July 2025 | Gregori, Giuliano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 614 590 A1

## ANNEX TO THE EUROPEAN SEARCH REPORT
## ON EUROPEAN PATENT APPLICATION NO.

EP 25 16 1530

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2025

| Patent document cited in search report | Publication date | Patent family member(s) | Publication date |
|---|---|---|---|
| US 2022140310 A1 | 05-05-2022 | CN 114447285 A | 06-05-2022 |
| | | EP 3996162 A1 | 11-05-2022 |
| | | JP 7150797 B2 | 11-10-2022 |
| | | JP 2022074704 A | 18-05-2022 |
| | | KR 20220061011 A | 12-05-2022 |
| | | US 2022140310 A1 | 05-05-2022 |
| EP 4057383 A2 | 14-09-2022 | CN 115084512 A | 20-09-2022 |
| | | EP 4057383 A2 | 14-09-2022 |
| | | JP 7288474 B2 | 07-06-2023 |
| | | JP 2022138394 A | 26-09-2022 |
| | | KR 20220127154 A | 19-09-2022 |
| | | US 2022293943 A1 | 15-09-2022 |

EPO FORM P0459

For more details about this annex : see Official Journal of the European Patent Office, No. 12/82